(19) Europäisches Patentamt / European Patent Office / Office européen des brevets

(11) **EP 2 500 692 A1**

(12) **EUROPEAN PATENT APPLICATION**

(43) Date of publication:
**19.09.2012 Bulletin 2012/38**

(51) Int Cl.:
**G01C 21/12** (2006.01)   **H04W 64/00** (2009.01)
**H04L 29/08** (2006.01)

(21) Application number: **11186996.2**

(22) Date of filing: **27.10.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.03.2011 TW 100109083**

(71) Applicant: **Acer Incorporated**
**Taipei Hsien 221 (TW)**

(72) Inventor: **Sip, Kim Yeung**
**221 Taipei Hsien (TW)**

(74) Representative: **Michalski Hüttermann & Partner**
**Neuer Zollhof 2**
**40221 Düsseldorf (DE)**

(54) **Systems and methods for detecting positions**

(57)   Systems and methods for detecting positions are provided. First, a reference point is recorded by a first mobile device. Then, a movement, an acceleration, and an orientation of the first mobile device are detected by at least one sensor. Then, after a predetermined time interval, a relative displacement between the reference point and the first mobile device is calculated according to the predetermined time interval, and the data detected by the at least one sensor, and the relative displacement to the first mobile device is transmitted to a second mobile device.

FIG. 3

**Description**

**CROSS REFERENCE TO RELATED APPLICATIONS**

This Application claims priority of Taiwan Patent Application No. 100109083, filed on March 17, 2011, the entirety of which is incorporated by reference herein.

**BACKGROUND OF THE INVENTION**

**Field of the Invention**

The disclosure relates generally to position management, and, more particularly to systems and methods that perform position detection for mobile devices.

**Description of the Related Art**

Recently, mobile devices, such as mobile phones, smart phones, and PDAs (Personal Digital Assistants), have become more and more technically advanced and multifunctional. For example, a mobile device may have a telecommunication, an email message, an advanced address book management, a media playback, and various other functions. Due to increased convenience and functions of the devices, these devices have become basic life necessities.
Generally, a mobile device may be equipped with wireless positioning technology, such as GPS (Global Positioning System) technology. A GPS can receive signals from satellites, and accordingly determine the position of mobile devices. However, due to the technical limitations of GPS', a GPS cannot receive signals from satellites when the GPS is located indoors, such that the position of mobile devices will not be known. Additionally, due to the limited precision of GPS', it is hard to determine the position of a mobile device when several mobile devices are located in a small area.
If mobile devices can locate the positions of other mobile devices, applications for user operational interfaces may be increased. Consequently, providing position information between mobile devices has become an important issue for innovation and development.

**BRIEF SUMMARY OF THE INVENTION**

Systems and methods for detecting positions are provided.
An embodiment of a system for detecting positions, applied to a first mobile device includes a transceiver, a storage unit, at least one sensor, and a processing unit. The storage unit is arranged for recording a reference point. The at least one sensor is arranged for detecting a movement, an acceleration, and an orientation of the first mobile device. In every predetermined time interval, the processing unit is arranged for calculating a relative displacement between the reference point and the first mobile device according to the predetermined time interval, and the data detected by the at least one sensor, and for transmitting the relative displacement to a second mobile device via the transceiver.
In an embodiment of a method for detecting positions, a reference point is recorded by a first mobile device. Then, a movement, an acceleration, and an orientation of the first mobile device are detected by at least one sensor. Then, in every predetermined time interval, a relative displacement between the reference point and the first mobile device is calculated according to the predetermined time interval, and the data detected by using at least one sensor, and the relative displacement is transmitted to a second mobile device.
In some embodiments, the second mobile device can calculate a current position of the first mobile device according to the reference point and the relative displacement of the first mobile device.
In some embodiments, the first mobile device records the reference point by performing an operation when it's located at the reference point. The operation can be an activation of a specific application, or a contact or knock with the second mobile device. In some embodiments, when contact or knock between the first mobile device and the second mobile device occurs, the first mobile device and the second mobile device can record and track positions relative to each other.
In some embodiments, the second mobile device can adopt a touch-sensitive screen to generate vicinity gesture information in order to adjust the current position of the first mobile device.
Methods for detecting positions may take the form of a program code embodied in a tangible media. When the program code is loaded into and executed by a machine, the machine becomes an apparatus for practicing the disclosed method.

## BRIEF DESCRIPTION OF THE DRAWINGS

The invention will become more fully understood by referring to the following detailed description with reference to the accompanying drawings, wherein:

Fig. 1 is a schematic diagram illustrating an embodiment of a system for detecting positions of the invention;

Fig. 2 is a schematic diagram illustrating an embodiment of a mobile device of the invention;

Fig. 3 is a flowchart of an embodiment of a method for detecting positions of the invention;

Fig. 4 is a flowchart of another embodiment of a method for detecting positions of the invention;

Fig. 5 is a schematic diagram illustrating another embodiment of a system for detecting positions of the invention; and

Fig. 6 is a flowchart of another embodiment of a method for detecting positions of the invention.

## DETAILED DESCRIPTION OF THE INVENTION

Systems and methods for detecting positions are provided.

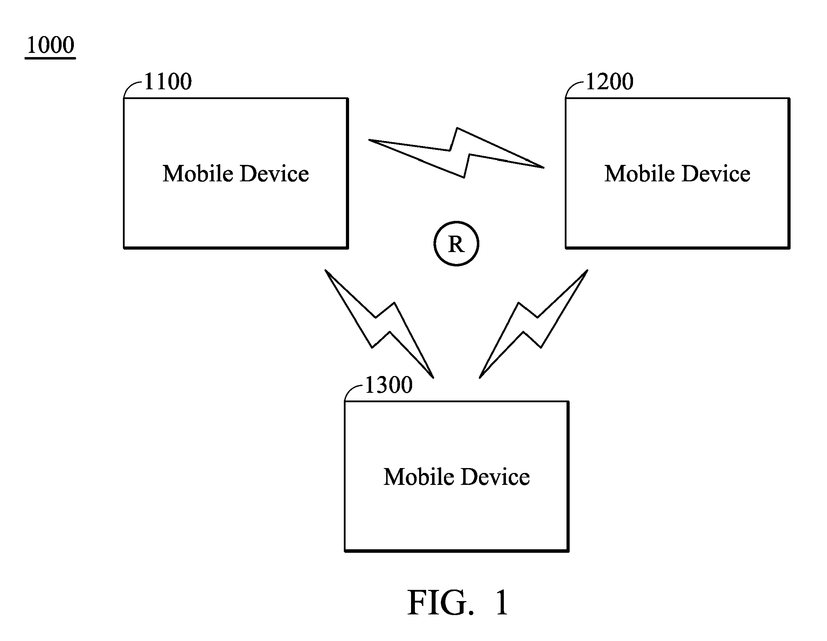

Fig. 1 is a schematic diagram illustrating an embodiment of a system for detecting positions of the invention. As shown in Fig. 1, in the system for detecting positions 1000, the mobile devices 1100, 1200 and 1300 can transmit information therebetween by using wireless transmission technology, such as WiFi, Bluetooth, or other transmission technologies. Each mobile device (1100, 1200 or 1300) can determine the current positions of other mobile devices by using a reference point R.

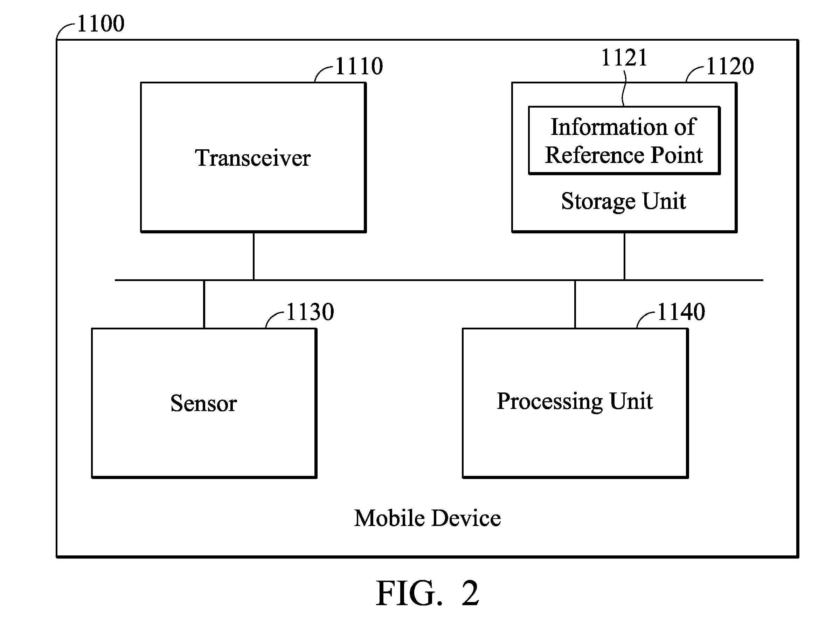

Fig. 2 is a schematic diagram illustrating an embodiment of a mobile device of the invention. The mobile device 1100 may be a portable device, such as a mobile phone, a smart phone, a PDA, or a Netbook.

The mobile device 1100 comprises a transceiver 1110, a storage unit 1120, at least one sensor 1130, and a processing unit 1140. The transceiver 1110 is arranged for transmitting related information to other mobile devices via wireless transmission technology, such as WiFi or Bluetooth technology. It is understood that, in some embodiments, the transceiver 1110 may be WiFi unit or a Bluetooth unit. The storage unit 1120 is arranged for recording information 1121 regarding the reference point R. The sensor 1130 is arranged for detecting a movement, an acceleration, and an orientation of the mobile device 1100. It is understood that, in some embodiments, the sensor 1130 in the mobile device 1100 can comprise a Gyroscope, a G-sensor, and/or an e-compass. The Gyroscope can detect the movement of the mobile device 1100. The G-sensor can detect the acceleration of the mobile device 1100. The e-compass can detect the orientation of the mobile device 1100. It is noted that, the above various sensor types are only examples of the present disclosure, and the present invention is not limited thereto. Any sensor which can detect the movement, the acceleration, and the orientation of the mobile device 1100 can also be applied in the present invention. The processing unit 1140 is arranged for performing the methods for detecting positions of the invention, which will be discussed further in the following paragraphs.

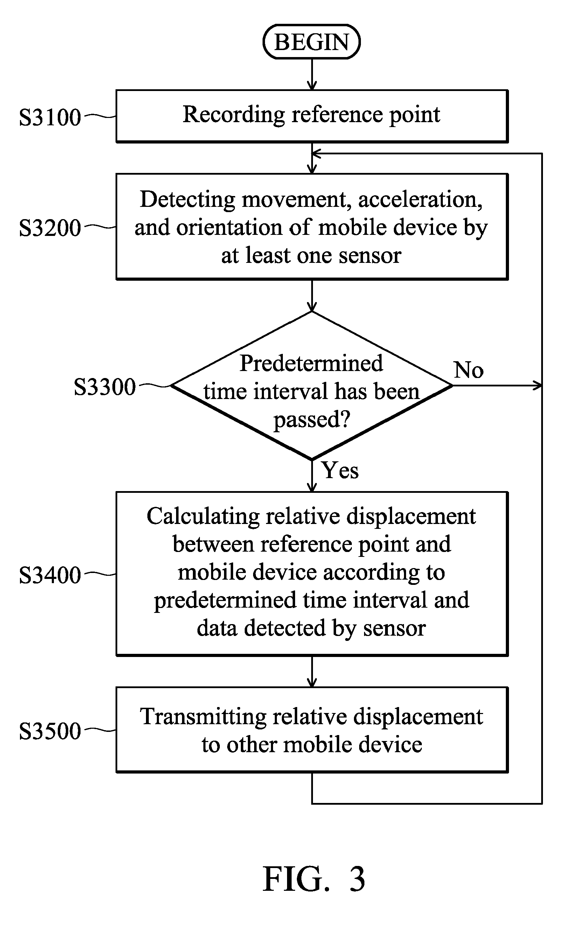

Fig. 3 is a flowchart of an embodiment of a method for detecting positions of the invention. The method for detecting positions can be used in a mobile device, such as a mobile phone, a smart phone, a PDA, a Netbook, or other portable device. In the embodiment, in every predetermined time interval the mobile device can calculate a relative displacement between the reference point and the mobile device according to the predetermined time interval, and transmit the relative displacement to other mobile devices.

In step S3100, a reference point is recorded. It is understood that, in some embodiments, the reference point may be at a fixed location. At this time, the mobile device can move to the reference point, and perform an operation, such as activation of a specific application in order to record the position information corresponding to the reference point. Further, in some embodiments, contact or knock between at least two mobile devices can occur, or at least two mobile devices can respectively activate a specific application. The position where contact or knock between the at least two mobile devices can be set as the reference point. When contact or knock between the at least two mobile devices occurs, the position information corresponding to the reference point is recorded. Additionally, in some embodiments, when contact or knock between the at least two mobile devices occurs, each mobile device can record the contacted or knocked mobile device, and track the position of the contacted or knocked mobile device.

Then, the mobile device can be moved. At the same time, in step S3200, a movement, an acceleration, and an orientation of the mobile device are detected by using at least one sensor of the mobile device. Similarly, as described, in some embodiments, the at least one sensor in the mobile device can comprise a Gyroscope, a G-sensor, and/or an e-compass. The Gyroscope can detect the movement of the mobile device. The G-sensor can detect the acceleration of the mobile device. The e-compass can detect the orientation of the mobile device. It is noted that, the above various sensor types are only examples of the present disclosure, and the present invention is not limited thereto. Any sensor which can detect the movement, the acceleration, and the orientation of the mobile device can also be applied in the present invention. Then, in step S3300, it is determined whether a predetermined time interval has passed. It is understood that, the predetermined time interval can be designed and adjusted according to various requirements and applications.

When the predetermined time interval has not passed (No in step S3300), the procedure returns to step S3200. When the predetermined time interval has passed (Yes in step S3300), in step S3400, a relative displacement between the reference point and the mobile device is calculated according to the predetermined time interval, and the data detected by the at least one sensor. It is understood that, in some embodiments, the relative displacement can be calculated according to the predetermined time interval, and the data detected by the at least one sensor using the following equations:

$$S(x) = v \cos \alpha \times t + \frac{1}{2} a \cos \alpha \times t^2,$$

$$S(y) = v \cos \beta \times t + \frac{1}{2} a \cos \beta \times t^2,$$

and
$$S(z) = v \cos \gamma \times t + \frac{1}{2} a \cos \gamma \times t^2,$$

wherein $S(x)$, $S(y)$ and $S(z)$ are the relative displacements of $x$, $y$ and $z$ axes corresponding to the mobile device, respectively, $v\cos\alpha$, $v\cos\beta$ and $v\cos\gamma$ are the components of the initial velocity of the mobile device in $x$, $y$ and $z$ axes, respectively, and $a \cos \alpha$, $a \cos \beta$ and $a \cos \gamma$ are the components of the acceleration of the mobile device in $x$, $y$ and Z axes, respectively. When the relative displacement between the reference point and the mobile device is calculated, in step S3500, the relative displacement is transmitted to other mobile devices via the transceiver of the mobile device. Thereafter, the procedure returns to step S3200.

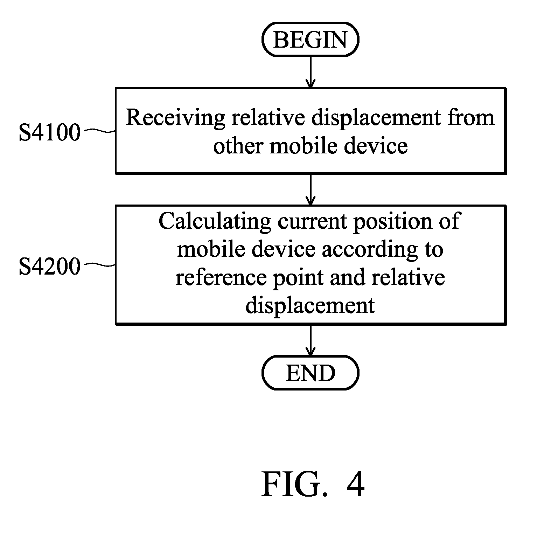

Fig. 4 is a flowchart of another embodiment of a method for detecting positions of the invention. The method for detecting positions can be used in a mobile device, such as a mobile phone, a smart phone, a PDA, a Netbook, or other portable device. In the embodiment, the mobile device can obtain a relative displacement between the reference point and a specific mobile device, and accordingly calculate a current position of the specific mobile device.

In step S4100, a relative displacement between the reference point and a specific mobile device is received from the specific mobile device. In step S4200, a current position of the specific mobile device is calculated according to the reference point and the relative displacement of the specific mobile device.

It is noted that, in some embodiments, when the mobile device (the user of the mobile device) is aware that there is a difference between the calculated position of the specific mobile device and an actual position, the user can generate a correction instruction using the mobile device in order to adjust the current position of the specific mobile device. For example, in some embodiments, the user can adopt a touch-sensitive screen (not shown) of the mobile device to generate vicinity gesture information. The vicinity gesture information can record a gesture pointed toward the specific mobile device. The current position of the specific mobile device can be corrected according to the vicinity gesture information and the movement track of the specific mobile device.

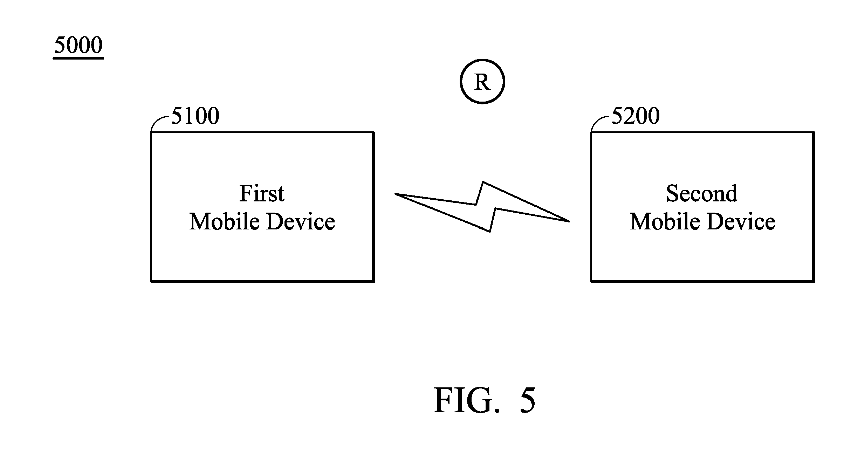

Fig. 5 is a schematic diagram illustrating another embodiment of a system for detecting positions of the invention. As shown in Fig. 5, in the system for detecting positions 5000, a first mobile device 5100 and a second mobile device 5200 can transmit related information therebetween by using wireless transmission technology, such as WiFi, Bluetooth, or other transmission technologies. The first mobile device 5100 and the second mobile device 5200 can determine the positions of other mobile devices by using a reference point R.

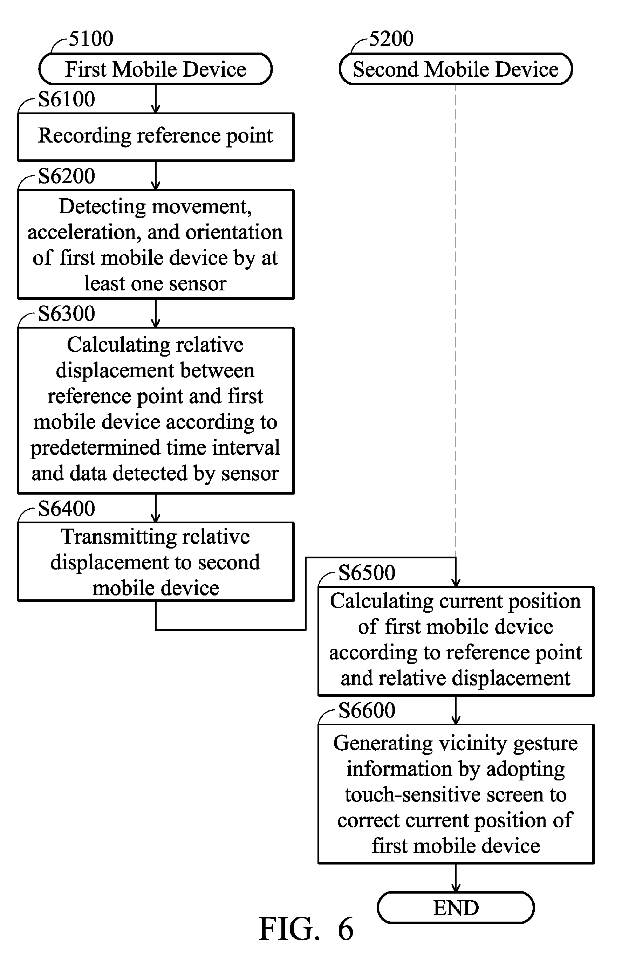

Please refer to Figs. 5 and 6, wherein Fig. 6 is a flowchart of another embodiment of a method for detecting positions of the invention. It is noted that, as described, the first mobile device 5100 and the second mobile device 5200 can determine the current positions of other mobile devices. However, in the embodiment, only the calculation of a current position of the first mobile device 5100 by the second mobile device 5200 is discussed.

In step S6100, the first mobile device 5100 records a reference point R. Similarly, in some embodiments, the reference point R may be at a fixed location. At this time, the first mobile device 5100 can move to the reference point R, and perform an operation, such as activation of a specific application, in order to record the position information corresponding to the reference point R. Further, in some embodiments, contact and knock of the first mobile device 5100 and the second mobile device 5200 may occur, or a specific application may be respectively activated. The position where contact or knock between the first mobile device 5100 and the second mobile device 5200 occurs can be set as the reference point R. When contact or knock between the first mobile device 5100 and the second mobile device 5200 occurs, the position information corresponding to the reference point R is recorded. Additionally, in some embodiments, when contact or knock between the first mobile device 5100 and the second mobile device 5200 occurs, the first mobile device 5100 and the second mobile device 5200 can respectively record the contacted or knocked mobile device, and track the subsequent position of the contacted or knocked mobile device.

Then, the first mobile device 5100 can be moved. At the same time, in step S6200, a movement, an acceleration, and an orientation of the first mobile device 5100 are detected by using at least one sensor of the first mobile device 5100. Similarly, as described previously, in some embodiments, the at least one sensor in the mobile device can comprise a Gyroscope, a G-sensor, and/or an e-compass. The Gyroscope can detect the movement of the mobile device. The G-sensor can detect the acceleration of the mobile device. The e-compass can detect the orientation of the mobile device. It is noted that, the various sensor types are only examples of the present disclosure, and the present invention is not limited thereto. Any sensor which can detect the movement, the acceleration, and the orientation of the mobile device can also be applied in the present invention. Then, in step S6300, a relative displacement between the reference point R and the first mobile device 5100 is calculated according to a predetermined time interval, and the data detected by the at least one sensor. It is understood that, in some embodiments, the relative displacement can be calculated according to the predetermined time interval, and the data detected by the at least one sensor using the following equations:

$$S(x) = v\cos\alpha \times t + \frac{1}{2}a\cos\alpha \times t^2,$$

$$S(y) = v\cos\beta \times t + \frac{1}{2}a\cos\beta \times t^2,$$

and
$$S(z) = v\cos\gamma \times t + \frac{1}{2}a\cos\gamma \times t^2,$$

wherein $S(x)$, $S(y)$ and $S(z)$ are the relative displacements of $x$, $y$ and $z$ axes corresponding to the first mobile device 5100, respectively, $v\cos\alpha$, $v\cos\beta$ and $v\cos\gamma$ are the components of the initial velocity of the first mobile device 5100 in *x*, *y* and *z* axes, respectively, and *a* cos α, *a* cos β and *a* cos γ are the components of the acceleration of the first mobile device 5100 in *x*, *y* and *z* axes, respectively.

It is understood that, in some embodiments, it is determined whether the predetermined time interval has passed. It is understood that, the predetermined time interval can be designed and adjusted according to various requirements and applications. When the predetermined time interval has not passed, the procedure waits until the predetermined time interval has passed. When the predetermined time interval has passed, the relative displacement between the reference point R and the first mobile device 5100 is calculated. When the relative displacement between the reference point R and the first mobile device 5100 is calculated, in step S6400, the relative displacement is transmitted to the second mobile device 5200 via the transceiver of the first mobile device 5100. When the second mobile device 5200 receives the relative displacement of the first mobile device 5100, in step S6500, a current position of the first mobile device 5100 is calculated according to the reference point R and the relative displacement of the first mobile device 5100. Then, in step S6600, vicinity gesture information is generated adopting a touch-sensitive screen of the second mobile device 5200 in order to adjust the current position of the first mobile device 5100 according to the vicinity gesture information and the movement track of the first mobile device 5100. It is understood that, in some embodiments, the vicinity gesture information can record a gesture pointed toward the first mobile device 5100.

Therefore, by using the systems and methods for detecting positions of the present disclosure, mobile devices can directly know and accurately determine the positions of other mobile devices without additional deployment of costly equipment or electronic units. Based on the technical effects of the present invention, applications for user operational interfaces may be increased.

Methods for detecting positions, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. A system for detecting positions, applied to a first mobile device, comprising:

   a transceiver;
   a storage unit, arranged for recording a reference point;
   at least one sensor, arranged for detecting a movement, an acceleration, and an orientation of the first mobile device; and
   a processing unit, arranged for calculating, in every predetermined time interval, a relative displacement between the reference point and the first mobile device according to the predetermined time interval, and the data detected by the at least one sensor, and for transmitting the relative displacement to a second mobile device via the transceiver.

2. The system of claim 1, wherein the second mobile device is further arranged for calculating a current position of the first mobile device according to the reference point and the relative displacement between the reference point and the first mobile device.

3. The system of claim 2, wherein the first mobile device records the reference point by performing an operation when it's located at the reference point, wherein the operation comprises an activation of a specific application, or a contact or knock with the second mobile device; and when contact or knock between the first mobile device and the second mobile device occurs, the first mobile device and the second mobile device record and track positions relative to each other.

4. The system of claim 2, wherein the second mobile device further adopts a touch-sensitive screen to generate vicinity gesture information in order to adjust the current position of the first mobile device.

5. The system of claim 1, wherein the transceiver comprises a WiFi unit or a Bluetooth unit.

6. The system of claim 1, wherein the at least one sensor comprises at least one of a Gyroscope, a G-sensor, and an e-compass.

7. A method for detecting positions, applied to a first mobile device, comprising:

recording a reference point;
detecting a movement, an acceleration, and an orientation of the first mobile device by using at least one sensor;
calculating, in every predetermined time interval, a relative displacement between the reference point and the first mobile device according to the predetermined time interval, and the data detected by the at least one sensor; and
transmitting the relative displacement to a second mobile device.

8. The method of claim 7, further comprising:

calculating a current position of the first mobile device by the second mobile device according to the reference point and the relative displacement between the reference point and the first mobile device.

9. The method of claim 8, further comprising:

the first mobile device recording the reference point by performing an operation when it's at the reference point, wherein the operation comprises an activation of a specific application, or a contact or knock with the second mobile device; and
when the contact or knock between the first mobile device and the second mobile device occurs, the first mobile device and the second mobile device recording and tracking positions relative to each other.

10. The method of claim 8, further comprising:

generating vicinity gesture information by adopting a touch-sensitive screen of the second mobile device in order to adjust the current position of the first mobile device.

FIG. 1

EP 2 500 692 A1

FIG. 2

BEGIN

S3100 — Recording reference point

S3200 — Detecting movement, acceleration, and orientation of mobile device by at least one sensor

S3300 — Predetermined time interval has been passed? — No

Yes

S3400 — Calculating relative displacement between reference point and mobile device according to predetermined time interval and data detected by sensor

S3500 — Transmitting relative displacement to other mobile device

FIG. 3

BEGIN

S4100 — Receiving relative displacement from other mobile device

S4200 — Calculating current position of mobile device according to reference point and relative displacement

END

FIG. 4

5000

FIG. 5

5100
First Mobile Device

5200
Second Mobile Device

S6100
Recording reference point

S6200
Detecting movement, acceleration, and orientation of first mobile device by at least one sensor

S6300
Calculating relative displacement between reference point and first mobile device according to predetermined time interval and data detected by sensor

S6400
Transmitting relative displacement to second mobile device

S6500
Calculating current position of first mobile device according to reference point and relative displacement

S6600
Generating vicinity gesture information by adopting touch-sensitive screen to correct current position of first mobile device

END

FIG. 6

Europäisches
Patentamt

European
Patent Office

Office européen
des brevets

# EUROPEAN SEARCH REPORT

Application Number

EP 11 18 6996

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/221298 A1 (HANNER CHRISTIAN THOMAS [SE]) 3 September 2009 (2009-09-03) * paragraph [0043]; figures 5,6 * ----- | 1-10 | INV. G01C21/12 H04W64/00 ADD. H04L29/08 |
| X | WO 2005/003875 A1 (SANDVIK TAMROCK OY [FI]; MAEKELAE HANNU [FI]; PULLI RIKU [FI]; SOIKKEL) 13 January 2005 (2005-01-13) * abstract * * paragraph [0018] - paragraph [0026]; figures 1, 2 * * paragraph [0032] * ----- | 1,7 | |
| A | WO 2004/077374 A1 (COMMW SCIENT IND RES ORG [AU]; SHARP IAN [AU]) 10 September 2004 (2004-09-10) * page 5, line 1 - page 6, line 20; figure 2 * ----- | 1-10 | |
| A | WO 2011/021068 A1 (SACKNOFF ERIC [US]) 24 February 2011 (2011-02-24) * abstract * ----- | 1-10 | |
| A | EP 1 077 579 A1 (TEXAS INSTRUMENTS INC [US]) 21 February 2001 (2001-02-21) * abstract * ----- | 1-10 | TECHNICAL FIELDS SEARCHED (IPC) G01C H04W |
| A | GB 2 264 837 A (KOKUSAI DENSHIN DENWA CO LTD [JP]) 8 September 1993 (1993-09-08) * page 6, line 14 - line 23 * * page 12, line 14 - page 17, line 20 * ----- | 1-10 | |
| A | US 2002/006800 A1 (MOHI NORMAN [US] MOHI NORMAN [US] ET AL) 17 January 2002 (2002-01-17) * paragraph [0028] * * paragraph [0041] - paragraph [0050]; figures 1,2, 3 * ----- -/-- | 1-10 | |

The present search report has been drawn up for all claims

| Place of search | Date of completion of the search | Examiner |
|---|---|---|
| Munich | 30 May 2012 | Kyritsi, Persefoni |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

EP 11 18 6996

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GB 2 380 080 A (E LEAD ELECTRONIC CO LTD [TW]) 26 March 2003 (2003-03-26)<br>* abstract *<br>* page 6 - page 7; figures 2,3 *<br>----- | 1-10 | |
| A | US 2003/008671 A1 (LUNDGREN DAVID A [US] ET AL) 9 January 2003 (2003-01-09)<br>* paragraph [0012] - paragraph [0024]; figures 1-2 *<br>----- | 1-10 | |

TECHNICAL FIELDS
SEARCHED      (IPC)

The present search report has been drawn up for all claims

| Place of search | Date of completion of the search | Examiner |
|---|---|---|
| Munich | 30 May 2012 | Kyritsi, Persefoni |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                    EP 11 18 6996

This annex lists the patent family members relating to the patent documents cited in  the above-mentioned European search report.
The members are as contained in the European Patent Office EDP file on
The European Patent Office is in no way liable for these particulars which are merely given for the purpose of information.

30-05-2012

| Patent document cited in search report | | Publication date | Patent family member(s) | | Publication date |
|---|---|---|---|---|---|
| US 2009221298 | A1 | 03-09-2009 | EP | 2250515 A1 | 17-11-2010 |
| | | | JP | 4880782 B2 | 22-02-2012 |
| | | | JP | 2011518452 A | 23-06-2011 |
| | | | US | 2009221298 A1 | 03-09-2009 |
| | | | WO | 2009106919 A1 | 03-09-2009 |
| WO 2005003875 | A1 | 13-01-2005 | AU | 2004254728 A1 | 13-01-2005 |
| | | | CA | 2530795 A1 | 13-01-2005 |
| | | | FI | 20040059 A | 04-01-2005 |
| | | | SE | 529645 C2 | 09-10-2007 |
| | | | SE | 0600002 A | 06-02-2006 |
| | | | US | 2006167608 A1 | 27-07-2006 |
| | | | US | 2010183422 A1 | 22-07-2010 |
| | | | WO | 2005003875 A1 | 13-01-2005 |
| WO 2004077374 | A1 | 10-09-2004 | AU | 2004214903 A1 | 10-09-2004 |
| | | | CA | 2517568 A1 | 10-09-2004 |
| | | | CN | 1764933 A | 26-04-2006 |
| | | | EP | 1602094 A1 | 07-12-2005 |
| | | | JP | 2006521601 A | 21-09-2006 |
| | | | KR | 20050106463 A | 09-11-2005 |
| | | | US | 2006125644 A1 | 15-06-2006 |
| | | | WO | 2004077374 A1 | 10-09-2004 |
| WO 2011021068 | A1 | 24-02-2011 | US | 2011068944 A1 | 24-03-2011 |
| | | | WO | 2011021068 A1 | 24-02-2011 |
| EP 1077579 | A1 | 21-02-2001 | EP | 1077579 A1 | 21-02-2001 |
| | | | JP | 2001095036 A | 06-04-2001 |
| | | | US | 6587689 B1 | 01-07-2003 |
| GB 2264837 | A | 08-09-1993 | GB | 2264837 A | 08-09-1993 |
| | | | JP | 5232210 A | 07-09-1993 |
| US 2002006800 | A1 | 17-01-2002 | CA | 2411138 A1 | 05-05-2004 |
| | | | US | 2002006800 A1 | 17-01-2002 |
| | | | US | 2003195008 A1 | 16-10-2003 |
| GB 2380080 | A | 26-03-2003 | DE | 10149670 A1 | 30-04-2003 |
| | | | GB | 2380080 A | 26-03-2003 |
| | | | JP | 2003004471 A | 08-01-2003 |
| | | | US | 2003073445 A1 | 17-04-2003 |
| US 2003008671 | A1 | 09-01-2003 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- TW 100109083